# DEMANDE DE BREVET EUROPEEN

(11) **EP 1 816 042 A1**
(43) Date de publication de la demande: **08.08.2007**
(21) Numéro de dépôt: 06124942.1
(22) Date de dépôt: 02.10.2002
(51) Int. Cl.: B60S 1/40

(54) **Essuie-glace de véhicule automobile comportant un fermoir de sécurité**

(30) Priorité: 15.10.2001 FR 0113831
(62) Demande divisionnaire de: 05110426.3
(71) Demandeur: VALEO SYSTEMES D'ESSUYAGE, 78321 La Verrière (FR)
(72) Inventeur: Poton, Eric, 78321, LA VERRIERE (FR)
(74) Mandataire: Rosolen-Delarue, Katell

(57) **Abrégé**

L'invention propose un connecteur d'essuie-glace destiné à assurer la connexion et l'articulation entre un bras d'essuie-glace (22) et un balai d'essuyage (24) de type « flat-blade », ledit connecteur (42) étant destiné à être engagé longitudinalement d'arrière en avant à l'intérieur de l'extrémité avant (32) du bras (22) qui est recourbée longitudinalement vers l'arrière en forme de U, et comportant au moins un élément déformable élastiquement de blocage (60) du connecteur (42) en position engagée du connecteur à l'intérieur de l'extrémité avant (32) du bras (22), et deux flancs (48) longitudinaux et verticaux prévus pour être reçus entre deux ailes (44) latérales d'un composant (40) du balai d'essuyage (24),

Selon l'invention, le connecteur (42) est maintenu en position engagée dans le bras (22) par un fermoir (74) de sécurité monté mobile par rapport au composant (40) entre une position ouverte permettant le désengagement du connecteur (42) hors du bras (22) et une position fermée dans laquelle le fermoir (74) vient obturer au moins partiellement le composant (40) de sorte qu'il participe à l'aérodynamisme de l'ensemble connecteur (42) - bras(22) - balai d'essuyage (24).

L'invention concerne également une pièce d'habillage, destinée à recevoir le connecteur (42) d'essuie-glace revendiqué, ladite pièce d'habillage comprenant un composant (40) et un fermoir (74).

## Description

L'invention concerne un connecteur d'essuie-glace de véhicule automobile.

L'invention concerne plus particulièrement un connecteur d'essuie-glace de véhicule automobile, destiné à assurer la connexion et l'articulation entre un bras d'essuie-glace et un balai d'essuyage, ledit connecteur étant engagé longitudinalement d'arrière en avant à l'intérieur de l'extrémité avant du bras qui est recourbée longitudinalement vers l'arrière en forme de U, et comportant au moins un élément déformable élastiquement de blocage du connecteur en position engagée du connecteur à l'intérieur de l'extrémité avant du bras, et deux flancs longitudinaux et verticaux prévus pour être reçus entre deux ailes latérales d'un composant du balai.

L'invention concerne également les éléments suivants :
- une pièce d'habillage destinée à recevoir un connecteur d'essuie-glace,
- un dispositif de connexion entre un balai d'essuyage et un bras d'essuie-glace, et
- un balai d'essuie-glace comprenant un support sur lequel est monté le connecteur selon l'invention.

De manière complémentaire, l'invention est également relative à un essuie-glace de véhicule automobile.

Le mode d'assemblage, du balai d'essuyage sur le bras d'essuie-glace, présenté précédemment est généralement connu.

Le connecteur est généralement emboîté élastiquement sur une tige transversale reliant les deux ailes longitudinales du composant de manière à pouvoir pivoter autour de celle-ci, et l'extrémité longitudinale avant du bras est recourbée longitudinalement en forme de U de manière à venir s'engager entre les deux flancs du connecteur, autour d'une âme centrale de forme complémentaire du connecteur.

Le blocage en position du connecteur est, de manière générale, assuré par un élément déformable élastiquement. Or, il se peut que sous l'effet d'un choc, le balai soit poussé violemment. L'élément de blocage n'est pas suffisamment résistant et se déforme. Il ne peut plus assurer sa fonction de blocage, permettant alors un désengagement accidentel du connecteur, et par la même occasion, une désolidarisation du balai d'avec le bras d'essuyage.

Selon une conception visant à réaliser des essuie-glace de faible hauteur, la structure articulée du balai d'essuie-glace qui porte la raclette ou lame d'essuyage est supprimée et ce sont par exemple les vertèbres, ou des éléments de renfort structurels analogues aux vertèbres, qui sont associées à la lame d'essuyage souple pour constituer le balai d'essuie-glace proprement dit, aussi appelé "flat-blade".

Ce balai de faible hauteur est lui aussi entraîné en balayage par un mécanisme adéquat comportant un bras d'essuie-glace, et étant donnée la faible hauteur des éléments structurels, le connecteur est emboîté sur la tige d'un composant qui est une pièce rapporté montée sur la structure du balai.

Il existe de nombreux modes de réalisation de pièces rapportées, comme par exemple ceux décrits et représentés dans le document WO-A-00/21811. Cependant, chacune de ces pièces rapportées ne peut recevoir qu'un profil particulier de bras d'essuie-glace qui lui est adapté.

Ainsi, lorsque l'on désire monter un balai d'essuie-glace du type "flat-blade" sur un véhicule conventionnel qui comporte un bras d'essuie-glace standard, ce montage est impossible ou tout au moins nécessite un ensemble spécifique de montage et d'articulation dont tous les composants sont spécifiques.

L'invention a donc pour objet de proposer un connecteur d'essuie-glace destiné à être monté sur un composant du balai et verrouillé en position montée par l'intermédiaire d'un fermoir de sécurité. Ceci permet de monter tout type d'essuie-glace sur un bras, et de disposer d'un connecteur standard tout en assurant un verrouillage sécuritaire du balai d'essuyage sur le bras d'essuie-glace.

Dans ce but, l'invention propose un connecteur d'essuie-glace du type décrit précédemment, et présentant les caractéristiques de la revendication 1.

Par ailleurs, l'invention propose également une pièce d'habillage comprenant un composant du balai d'essuie-glace, destinée à recevoir le connecteur d'essuie-glace revendiqué, et présentant les caractéristiques de la revendication 2. De manière particulièrement intéressante, la forme de la pièce d'habillage est indépendante de celle du connecteur ce qui permet d'avoir une pièce d'aspect extérieur identique quelque soit le type de connecteur utilisé entre le bras d'essuyage et le balai d'essuie-glace.

La présente invention présente d'autres caractéristiques tout à fait avantageuses relatives à la pièce d'habillage et à ses composants telles que présentées dans les revendications dépendantes.

D'autres caractéristiques et avantages de l'invention apparaîtront à la lecture de la description détaillée qui suit pour la compréhension de laquelle on se reportera aux figures annexées parmi lesquelles :
- la figure 1 est une vue en perspective d'un essuie glace conforme à l'invention dans lequel le fermoir est en position ouverte ;
- la figure 2 est une vue en perspective similaire à celle de figure 1, dans laquelle le fermoir est en position fermée ;

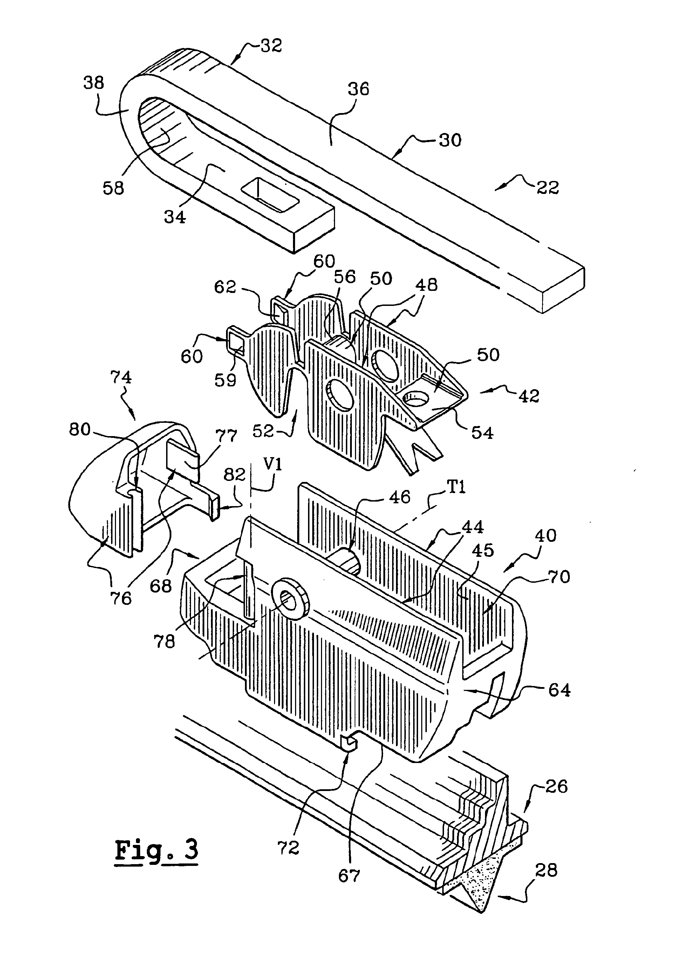

- la figure 3 est une vue en perspective éclatée de l'essuie-glace ;
- la figure 4 est une section longitudinale de l'essuie-glace conforme à l'invention suivant un plan horizontal montrant le blocage du connecteur en position engagée à l'intérieur du bras ;
- la figure 5 est une section similaire à celle de la figure 4, dans laquelle le fermoir est en position fermée.

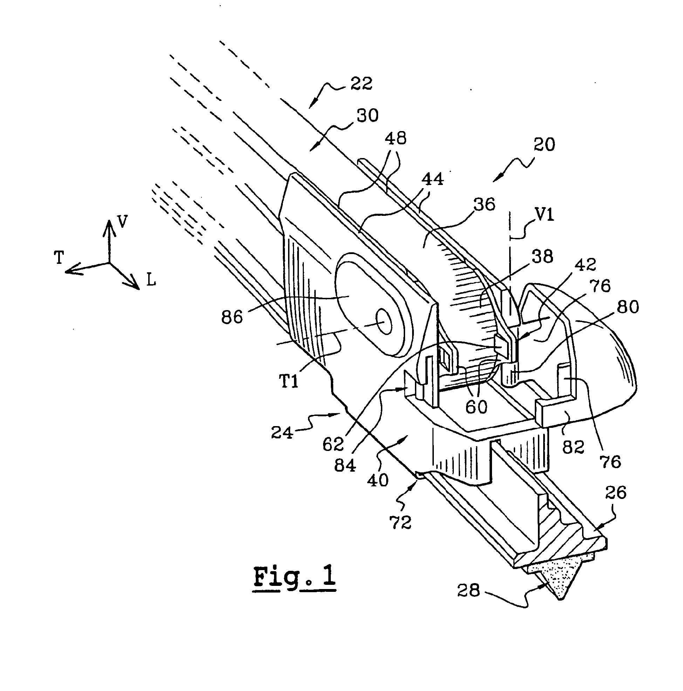

Pour la description de l'invention, on adoptera à titre non limitatif les orientations verticale, longitudinale et transversale selon le repère V, L, T indiqué à la figure 1.

Dans la description qui va suivre, des éléments identiques, similaires ou analogues seront désignés par les mêmes chiffres de référence.

Comme on pourra le constater notamment sur les figures, les principaux éléments et composants de l'essuie-glace présentent une symétrie générale de conception par rapport à un plan longitudinal et vertical médian, des éléments symétriques étant désignés par les mêmes références.

Les figures représentent les principaux composants un essuie-glace 20 réalisé conformément aux enseignements de l'invention.

L'essuie-glace 20 comporte principalement un bras 22, et un balai 24 constitué notamment d'une structure de support 26, et d'une raclette d'essuyage 28.

Le bras d'essuie-glace 22 est constitué par une tige métallique plate 30 qui s'étend selon la direction longitudinale "L" générale du bras 22 et du balai d'essuie-glace 24. L'extrémité libre avant 32 du bras 22 est en forme de crochet coudé en U et est constituée par une branche longitudinale inférieure 34, par une branche longitudinale supérieure 36 et par une branche courbe de raccordement 38 qui s'étend sensiblement sur un demi-cercle.

Le balai 24 est ici un balai d'essuie-glace du type "flat-blade", c'est à dire un balai d'essuie glace de faible hauteur. La structure de support 26 a pour fonction, d'une part, de plaquer la raclette d'essuyage 28 contre la vitre à essuyer et, d'autre part, de l'entraîner en balayage alterné entre deux positions extrêmes de balayage afin d'essuyer la vitre.

La structure de support 26 porte un composant 40 de liaison qui reçoit des moyens de liaison et d'articulation sur l'extrémité 32 du bras 22 autour d'un axe transversal "T1" de type connu qui sont constitués principalement d'un connecteur 42.

Le composant 40, rapporté sur le balai d'essuyage 24, et le connecteur 42 forment ainsi un dispositif de connexion du balai d'essuyage 24 au bras d'essuie-glace 22.

Le composant 40, qui sera décrit plus loin de manière détaillée, comporte principalement deux ailes 44 longitudinales et verticales reliées par une tige d'articulation transversale 46.

Le connecteur 42 comporte essentiellement deux flancs latéraux parallèles 48 reliés entre eux par une âme transversale 50. Il est destiné à être reçu entre les deux faces internes 45 des ailes 44 du composant 40 du balai d'essuie-glace 24, et à s'emboîter élastiquement sur la tige d'articulation 46.

A cet effet, le connecteur 42 comporte dans chacun de ses flancs 48 une fente 52, sensiblement verticale et agencée sensiblement au centre du connecteur 42.

Ainsi, le connecteur est engagé du haut vers le bas, entre les deux ailes 44 du balai d'essuie-glace 24 jusqu'à ce que la tige d'articulation 46 soit engagée élastiquement au fond des fentes 52 du connecteur 42.

De manière connue, l'âme transversale 50 qui relie les deux flancs parallèles 48 du connecteur 42 présente un profil convexe complémentaire du profil interne concave de l'extrémité 32 en forme de crochet en U du bras d'essuie-glace 22. L'âme comporte une première portion plane horizontale 54 qui s'étend longitudinalement vers l'arrière et une seconde portion avant incurvée 56, destinée à recouvrir au moins partiellement la tige d'articulation 46, et dont la forme est complémentaire de celle de la face interne 58 de la branche courbe 38 du crochet 32.

La tige 46 assure le montage articulé du connecteur 42 par rapport au balai d'essuie-glace 24 autour de l'axe transversal "T1".

Après avoir engagé le connecteur 42 sur la tige 46, l'assemblage du bras d'essuie-glace 22 sur ce sous-ensemble 42, 46 s'effectue, selon une conception connue, en venant engager longitudinalement d'avant en arrière l'extrémité en forme de crochet 32 sur l'âme 50 du connecteur 42, les faces latérales parallèles de la tige 30 étant reçues entre les flancs 48 du connecteur 42.

Dans un tel type d'assemblage, il est prévu des moyens de blocage par emboîtement élastique qui permettent de bloquer longitudinalement le connecteur 42 par rapport au bras 22 lorsque le connecteur 42 est monté en position engagée dans l'extrémité en forme de crochet 32.

Ces moyens de blocage automatique consistent en deux pattes 60 qui sont portées chacune par un flanc 48 du connecteur 42.

Chaque patte 60 s'étend longitudinalement vers l'avant à partir du chant avant du flanc 48 qui la porte. L'extrémité libre 62 de la patte 60 est en forme d'un bec s'étendant transversalement vers l'intérieur du connecteur 42, et qui est destinée à coopérer avec la face convexe de la branche courbe 38 de l'extrémité en forme de crochet 32.

Le composant 40 est une pièce moulée en matière plastique de forme générale parallélépipédique rectangle qui peut être réalisée en une ou deux parties.

Il est constitué de deux ailes latérales parallèles 44, une extrémité arrière 64 et une embase plane 66 horizontale.

La face avant 68 et la face supérieure 70 du composant sont ouvertes afin de permettre le montage du connecteur 42 puis du bras 22.

La face inférieure 67 de l'embase 66 reçoit des moyens de raccordement du composant 40. Ces moyens de raccordement comportent des glissières 72 qui sont destinées à recevoir la structure de support 26 et qui permettent le montage du composant 40 sur la structure de support 26 par un coulissement longitudinal. Les moyens de raccordement comportent aussi des moyens de verrouillage longitudinal du montage (non représentés en détails), comme par exemple un verrouillage par emboîtement élastique de formes complémentaires.

Après avoir mis en place le connecteur 42 dans le composant 40, le connecteur 42 est engagé à l'intérieur de l'extrémité en forme de crochet 32. Lors de l'engagement du connecteur 42, les pattes 60 se déforment élastiquement vers l'extérieur, du fait de la conformation en rampe des faces latérales internes 61 des pattes 60 pour permettre le passage du bras 22, et lorsque le connecteur 42 est engagé dans le bras 22, les pattes 60 reprennent leur état de repos pour assurer le blocage longitudinal du connecteur 42 en position engagée à l'intérieur du crochet 32.

Le connecteur 42 est reçu entre les ailes 44 du composant 40 et les pattes 60 sont situées à l'avant des chants avant des ailes 44, en vue d'éviter que les ailes 44 n'empêchent la déformation des pattes 60 lorsque l'on veut pouvoir démonter le bras 22.

Conformément aux enseignements de l'invention, la face avant 68 du composant 40 est obturée par un fermoir de sécurité 74 formant aussi capuchon d'habillage.

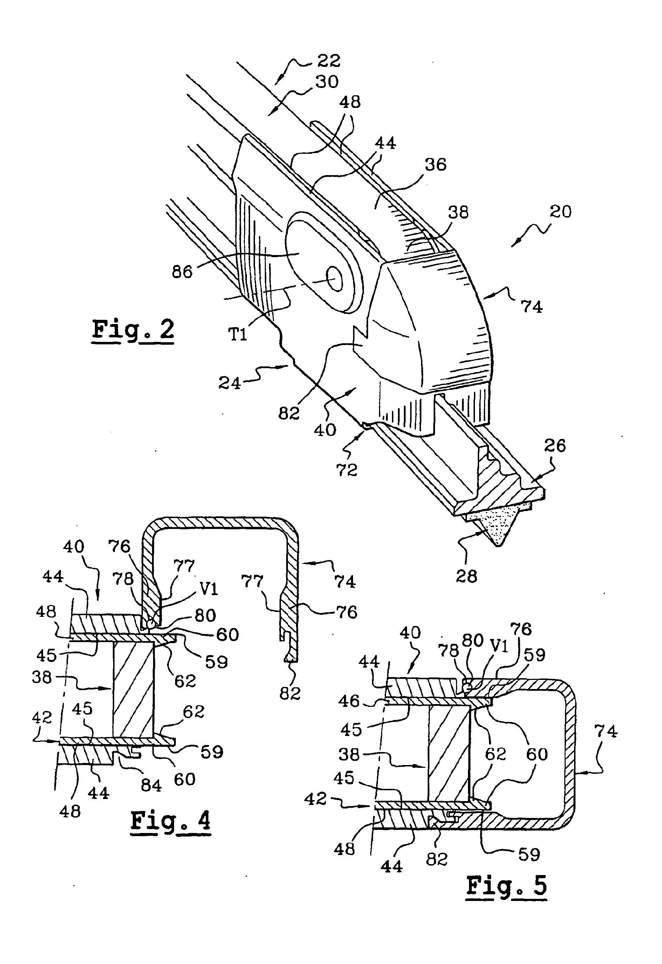

Le fermoir 74 est une pièce creuse moulée en matière plastique en forme de capuchon. Il est articulé autour d'un axe vertical V1 du composant, et il est aussi monté mobile entre une position fermée de verrouillage du blocage du connecteur 42 en position engagée à l'intérieur de l'extrémité en forme de crochet 32 illustré à la figure 2, et une position ouverte permettant le désengagement du connecteur 42.

Le verrouillage du blocage du connecteur 42 est assuré par les faces internes 77 des parois latérales verticales 76 du fermoir 74 qui viennent s'étendre le long des faces latérales extérieures 59 des pattes 60. Ainsi, le fermoir 74 empêche que les pattes 60 soient déformées transversalement vers l'extérieur du connecteur 42, et donc que le connecteur 42 ne puisse être désengagé hors du crochet 32.

Le fermoir 74 participe à l'esthétique et à l'aérodynamique de l'ensemble. A cet effet, lorsque le fermoir 74 est en position fermée, les faces latérales 76 s'étendent dans le prolongement des ailes 44 du composant 40, de sorte que leurs faces latérales extérieures soient affleurantes les unes aux autres.

L'axe "V1" d'articulation du fermoir 74 est situé au niveau du chant avant d'une aile 44 du composant 40. La charnière d'articulation peut est réalisée par un élément cylindrique 78 du composant 40 qui est recouvert par un élément formant crochet 80 du fermoir 74 comportant un évidement complémentaire de l'élément cylindrique 78.

L'immobilisation en position fermée du fermoir 74 est assurée par une patte 82 du fermoir 74. La patte d'immobilisation 82, qui s'étend longitudinalement vers l'arrière depuis le flanc arrière de la paroi latérale 76 opposée à la face latérale 76 recevant l'élément formant crochet 80. La patte 82 vient s'emboîter élastiquement dans un logement 84 de l'aile 44 associée.

Lorsqu'un balai neuf doit être monté sur le bras, le composant 40 du balai 24 usagé n'est pas conservé, mais il est lui aussi remplacé par un composant du balai neuf. Ainsi, chaque composant peut recevoir un témoin permettant de définir quand le balai est usagé. Cet élément se présente de manière générale sous la forme d'une pastille, dite témoin de vieillissement 86, apposée sur une face extérieure d'une aile 44 du composant 40.

Après la mise en place du nouveau balai, il est nécessaire d'ôter une pellicule de protection du témoin afin d'initialiser la détection du vieillissement. On peut ainsi prévoir que le capuchon-fermoir 74 est à l'origine fermé et que son ouverture nécessite d'ôter la pellicule de protection.

L'essuie-glace 20 a été décrit comme comportant un balai 24 du type "flat-blade". Il n'est cependant pas limité à ce mode de réalisation et peut comporter un balai 24 standard du type dans lequel la structure de support 26 comporte un étrier principal qui porte des étriers secondaires. Ainsi, dans le cas d'un balai 24 standard, le composant 40 est un élément de l'étrier principal de la structure de support 26.

Il sera compris que l'invention n'est pas limitée à ce mode de réalisation et que l'on peut utiliser des inversions mécaniques ou des équivalents simples.

Ainsi, le fermoir 74 peut être réalisé venu de matière avec le composant 40. Plus précisément, le chant arrière d'une face latérale 76 du fermoir 74 est relié au chant avant correspondant du composant 40 par une bande de matière de faible épaisseur qui forme une charnière d'articulation d'axe "V1".

L'invention permet donc d'avoir un montage d'essuie-glace modulaire, c'est à dire qu'à partir d'un bras et d'un connecteur standards, il est possible de monter tout type de balai d'essuie-glace muni d'un composant conforme à l'invention, que le balai soit du type "flat-blade" ou non. L'invention permet aussi d'avoir un montage sécurisé sans risque de démontage inopiné du balai.

## Revendications

1. Connecteur d'essuie-glace destiné à assurer la connexion et l'articulation entre un bras d'essuie-glace (22) et un balai d'essuyage (24) de type « flat-blade », ledit connecteur (42) étant destiné à être engagé longitudinalement d'arrière en avant à l'intérieur de l'extrémité avant (32) du bras (22) qui est recourbée longitudinalement vers l'arrière en forme de U, et comportant au moins un élément déformable élastiquement de blocage (60) du connecteur (42) en position engagée du connecteur à l'intérieur de l'extrémité avant (32) du bras (22), et deux flancs (48) longitudinaux et verticaux prévus pour être reçus entre deux ailes (44) latérales d'un composant (40) du balai d'essuyage (24),
**caractérisé en ce que** le connecteur (42) est maintenu en position engagée dans le bras (22) par un fermoir (74) de sécurité monté mobile par rapport au composant (40) entre une position ouverte permettant le désengagement du connecteur (42) hors du bras (22) et une position fermée dans laquelle le fermoir (74) vient obturer au moins partiellement le composant (40) de sorte qu'il participe à l'aérodynamisme de l'ensemble connecteur (42) - bras(22) - balai d'essuyage (24).

2. Connecteur d'essuie-glace selon la revendication 1, **caractérisé en ce que**, en position fermée du fermoir (74), les faces extérieures du fermoir (74) s'étendent dans le prolongement des faces extérieures du composant (40).

3. Pièce d'habillage, rapportable sur un balai d'essuyage (24), comprenant un composant (40) de balai d'essuyage (24) destiné à recevoir un connecteur (42) d'essuie-glace selon la revendication 1 ou 2, **caractérisé en ce qu'**elle comporte en outre un fermoir (74).

4. Pièce d'habillage selon la revendication 3, **caractérisée en ce qu'**elle présente une forme standard, rapportable sur le balai d'essuyage (24), de forme indépendante de celle du connecteur (42) de sorte qu'elle présente un aspect extérieur sensiblement identique quelque soit le type de connecteur utilisé entre le bras d'essuie-glace (22) et le balai d'essuyage (24).

5. Pièce d'habillage pour un connecteur d'essuie-glace selon l'une des revendications 3 ou 4, **caractérisée en ce que** le composant (40) est une pièce de forme générale parallélépipédique rectangle comprenant deux ailes latérales (44) et une extrémité arrière (64).

6. Pièce d'habillage pour un connecteur d'essuie-glace selon l'une quelconque des revendications 3 à 5, **caractérisée en ce que** le composant (40) est une pièce rapportée montée sur une structure de support (26) de la lame d'essuyage (28).

7. Pièce d'habillage pour un connecteur d'essuie-glace selon l'une quelconque des revendications 3 à 6, **caractérisée en ce que** le composant (40) comprend également une face avant (68) et une face supérieure (70) qui sont ouvertes pour le montage du connecteur (42) et du bras d'essuyage (22).

8. Pièce d'habillage pour un connecteur d'essuie-glace selon la revendication 7, **caractérisée en ce que**, en position fermée du fermoir (74), la face avant (68) du composant (40) est obturée par ledit fermoir (74).

9. Pièce d'habillage pour un connecteur d'essuie-glace selon la revendication 5 prise ensemble avec la revendication 7 ou 8, **caractérisée en ce que** le composant (40) comprend un échancrure sur les parties avant (68) et arrière (64) du composant pour le passage de la structure de support (26).

10. Pièce d'habillage pour un connecteur d'essuie-glace selon l'une quelconque des revendications 6 à 9, **caractérisée en ce qu'**elle comprend des moyens de raccordement du composant (40) à la structure de support (26)

11. Pièce d'habillage pour un connecteur d'essuie-glace selon la revendication 10, **caractérisée en ce que** les moyens de raccordement comprennent des glissières pour recevoir la structure de support (26) et des moyens de verrouillage longitudinal des moyens de raccordement sur la structure de support (26).

12. Pièce d'habillage pour un connecteur d'essuie-glace selon l'une quelconque des revendications 4 à 11, **caractérisée en ce que** le composant (40) est réalisé sous la forme d'une pièce moulée en une ou deux parties.

13. Pièce d'habillage pour un connecteur d'essuie-glace selon l'une quelconque des revendications 3 à 11, **caractérisée en ce que** le fermoir (74) est monté articulé par rapport au composant (40).

14. Pièce d'habillage pour un connecteur d'essuie-glace selon la revendication 12, **caractérisée en ce que** l'articulation du fermoir (74) par rapport au composant (40) est réalisé par une charnière d'articulation formée par un élément cylindrique (78), ou axe d'articulation, du composant (40) recouvert par un élément formant crochet (80) du fermoir (74) comportant un évidement complémentaire de l'élément cylindrique (78).

15. Pièce d'habillage pour un connecteur d'essuie-glace selon la revendication 14, **caractérisée en ce que** l'axe d'articulation (78) du fermoir (74) est situé à proximité de la partie avant (68) du composant (40).

16. Pièce d'habillage selon l'une quelconque des revendications 3 à 15, **caractérisée en ce que** le fermoir (74) est une pièce creuse moulée en forme de capuchon.

17. Pièce d'habillage selon l'une quelconque des revendications 3 à 16, **caractérisée en ce que** le fermoir (74) est réalisé venu de matière avec le composant (40).

18. Pièce d'habillage selon l'une quelconque des revendications 3 à 17, **caractérisée en ce que** le fermoir (74) est réalisé en une ou plusieurs pièces.

19. Pièce d'habillage selon l'une quelconque des revendications 3 à 18, **caractérisée en ce que** l'immobilisation, en position fermée, du fermoir (74) dans le composant (40), est assurée par emboîtement élastique de formes complémentaires (82, 84).

20. Pièce d'habillage selon la revendication 19, **caractérisée en ce que** le fermoir (74) comprend au moins une patte (82) qui en position fermée du fermoir (74) coopère par emboîtement élastique avec un logement (84) de l'aile (44) associée.

21. Pièce d'habillage selon l'une quelconque des revendications 3 à 20, **caractérisée en ce que**, une fois le connecteur (42) monté sur le bras d'essuyage (22), le basculement du fermoir (74), en position fermée, est indicateur du bon positionnement du connecteur (42) dans le bras d'essuyage (22).

22. Pièce d'habillage selon l'une quelconque des revendications 3 à 21, **caractérisée en ce que** l'une de ailes (44) du composant (40) reçoit sur sa face extérieure des indications à l'usage de l'utilisateur.

23. Pièce d'habillage selon la revendication 22, **caractérisée en ce que** l'aile du composant reçoit un témoin de vieillissement (86).

24. Dispositif de connexion d'un balai d'essuyage (24) à un bras d'essuie-glace (22) **caractérisé en ce qu'**il comprend un connecteur selon l'un des revendications 1 ou 2 et une pièce d'habillage selon l'une quelconque des revendications 3 à 23.

25. Balai d'essuyage comportant une structure de support (26) d'une lame d'essuyage (28) et des moyens de connexion à un bras d'essuie-glace (22), **caractérisé en ce que** les moyens de connexion comportent une pièce d'habillage formant pièce rapportée montée sur la structure de support (26) selon l'une des revendications 3 à 23 et recevant un connecteur d'essuie-glace (42) selon l'une des revendications 1 ou 2.

26. Essuie-glace (20) de véhicule automobile comportant un balai d'essuyage (24) et un dispositif de connexion, entre un bras d'essuie-glace (22) et le balai d'essuyage (24) pourvu d'un connecteur (42) d'essuie-glace, selon l'une des revendication 1 à 2 et d'une pièce d'habillage selon l'une des revendication 3 à 23.

27. Dispositif d'essuyage notamment pour un véhicule automobile comprenant un bras d'essuie-glace (22), ledit dispositif comprenant :
- un balai d'essuyage (24),
- une pièce d'habillage destinée à être connecté au balai d'essuyage, ladite pièce d'habillage comprenant deux ailes (44) latérales reliées par une tige d'articulation transversale (46),
- un connecteur (42) destiné à assurer la connexion entre la pièce d'habillage et le bras d'essuyage (22), ledit connecteur comprenant deux flancs latéraux parallèles reliés entre eux par une âme transversale (50) longitudinales configurée pour s'ajuster élastiquement sur la tige d'articulation transversale (46) de la pièce d'habillage, ainsi qu'un élément déformable élastiquement dont la déformation élastique s'opère lors de l'engagement ou du désengagement du bras d'essuyage dans le connecteur,
**caractérisé en ce que** le dispositif comprend, en outre, un fermoir de sécurité (74) monté mobile sur la pièce d'habillage entre un position ouverte permettant le désengagement du connecteur (42) hors du bras (22) suite à la déformation élastique dudit élément déformable et une position fermée dans laquelle le fermoir prévient le désengagement du connecteur (42) hors du bras (22), ledit fermoir comprenant au moins une patte (82) déformable élastiquement lors du passage de la position ouverte à la position fermée et configurée pour immobiliser ledit fermoir (74) dans une position fermée par emboîtement élastique.
